# EUROPEAN PATENT SPECIFICATION

(11) **EP 0 571 456 B1**
(45) Date of publication and mention of the grant of the patent: **08.11.1995**
(21) Application number: 92904570.6
(22) Date of filing: 06.02.1992
(51) Int. Cl.: C09K 3/18, C04B 41/50, C23F 11/08

(54) **METHOD TO REDUCE SCALING DUE TO FREEZING AND THAWING IN CONCRETE**
VERFAHREN ZUR VERMINDERUNG DES ABBLATTERNS VON BETON VERURSACHT DURCH FROST UND TAUEN
PROCEDE DE REDUCTION DE L'ECAILLAGE DU BETON DU AU GEL ET AU DEGEL

(30) Priority: 14.02.1991 US 655793
(43) Date of publication of application: 01.12.1993
(73) Proprietor: Domtar Inc., Montreal (CA)
(72) Inventor: MALRIC, Bernard, F-01220 Divonne-les-Bains (FR); BEAUDOIN, Réjean, Vaudreuil, Quebec J7V 8P5 (CA); BERTHELOT, Chantal, Vaudreuil, Quebec J7V 8P5 (CA)
(74) Representative: Rees, David Christopher
(86) International application number: PCT/CA92/00046
(87) International publication number: WO 92/14796

(56) References cited:
- EP-A- 0 096 619
- EP-A- 0 253 357
- EP-A- 0 288 812
- EP-A- 0 322 183

## Description

This invention relates to a method to reduce scaling due to freezing and thawing of concrete, particularly when a deicer, such as sodium chloride, is used to deice the surface of a concrete.

US-A-5071579 describes the use of sodium fluorophosphate, also known as "sodium monofluorophosphate" and abbreviated as "MFP", to prevent corrosion of reinforced concrete containing steel rebars when such concrete is exposed to a corrosive environment, for example, chloride ions.

As described in this Patent, establishment of galvanic corrosion cells at the steel rebars results in corrosion of the steel, with creation of expansive forces which destroy the concrete.

Concrete is used in the construction of buildings and in the manufacture of articles including paving slabs, structural members, curbing, gutters, pipes and other cast articles.

A particular problem with concrete is that it deteriorates when subjected to repeated cycles of freezing and thawing.

The poor freeze/thaw durability of concrete is thought to be due to pressures generated by moisture movement through pores inherent in the concrete structure. The migration of the water in freeze/thaw cycles results in pressure build-up within the concrete structure, and the pressure is relieved by formation of fissures or fractures in the concrete, with consequent failure of the concrete.

Failure of concrete due to freeze/thaw cycles is unrelated to failure due to corrosion of steel rebar reinforcement in concrete, and arises with both reinforced and non-reinforced concrete.

It is an object of the present invention to reduce scaling in concrete due to freezing and thawing.

According to one aspect of the invention, there is provided a method for reducing scaling on a concrete surface due to freezing and thawing, comprising: contacting a surface of a non-reinforced concrete with a system containing at least sodium fluorophosphate, and allowing said sodium fluorophosphate to penetrate said concrete surface into a surface region of the concrete, to provide in the surface region an amount of said sodium fluorophosphate effective to reduce scaling on said surface, due to freezing and thawing.

The method may include a step of drying said concrete to increase the capacity of said concrete to receive said sodium fluorophosphate, prior to contacting the concrete surface with sodium fluorophosphate. In a preferred form, the invention may provide a method for reducing scaling on a concrete surface due to freezing and thawing comprising: drying a surface of a concrete to increase the capacity of the concrete to receive sodium fluorophosphate, contacting said surface of said concrete with a system comprising a solution of sodium fluorophosphate dissolved in an aqueous medium, and allowing said sodium fluorophosphate to penetrate said concrete surface into a surface region of the concrete, to provide in the surface region an amount of said sodium fluorophosphate effective to reduce scaling on said surface, due to freezing and thawing.

The method of the invention is applicable to non-reinforced concrete and reinforced concrete, for example, concrete reinforced with steel rebars.

Preferably, the system comprises a solution of sodium fluorophosphate dissolved in an aqueous medium. The system may incorporate additionally a deicer such as sodium chloride. Preferably, the fluorophosphate is sodium monofluorophosphate.

Preferably, the contacting step is carried out immediately following setting of said concrete. The invention also extends to a non-reinforced concrete having a concrete surface with at least a residual amount of sodium fluorophosphate, and to the use of sodium monofluorophosphate for reducing scaling of a concrete when the concrete when the concrete is subject to freezing and thawing.

Preferably, the monofluorophosphate is in aqueous solution. The invention also extends to use of a system comprising sodium monofluorophosphate and a deicer for reducing scaling of a concrete when the concrete is subject to freezing and thawing.

The concrete may be contacted with the system by numerous means, including but not limited to: laying, spraying, brushing, rolling, painting, soaking, immersing, impregnating or powdering; or by raising a dike or a dam around a concrete to treat a concrete slab with a solution of MFP; or by any other means of contacting a concrete surface with sodium fluorophosphate.

The invention is preferably directed to a method of spraying concrete with an aqueous solution of sodium fluorophosphate.

The word "system" as employed herein contemplates the inclusion of solvents, deicers and carriers, that may be used with the sodium fluorophosphate in the treatment of the concrete.

The invention has application to the treatment of concrete, including a concrete surface.

The concrete may be a non-reinforced concrete or a reinforced concrete, for example, concrete reinforced with rebars, particularly steel rebars.

Suitably the sodium monofluorophosphate is applied to an aqueous solution containing up to 35%, by weight, of the sodium monofluorophosphate, more especially 0.5 to 20%, by weight.

The invention may be carried into practice in various ways and some preferred embodiments will now be described in the follow examples and with reference to the accompanying drawings in which:

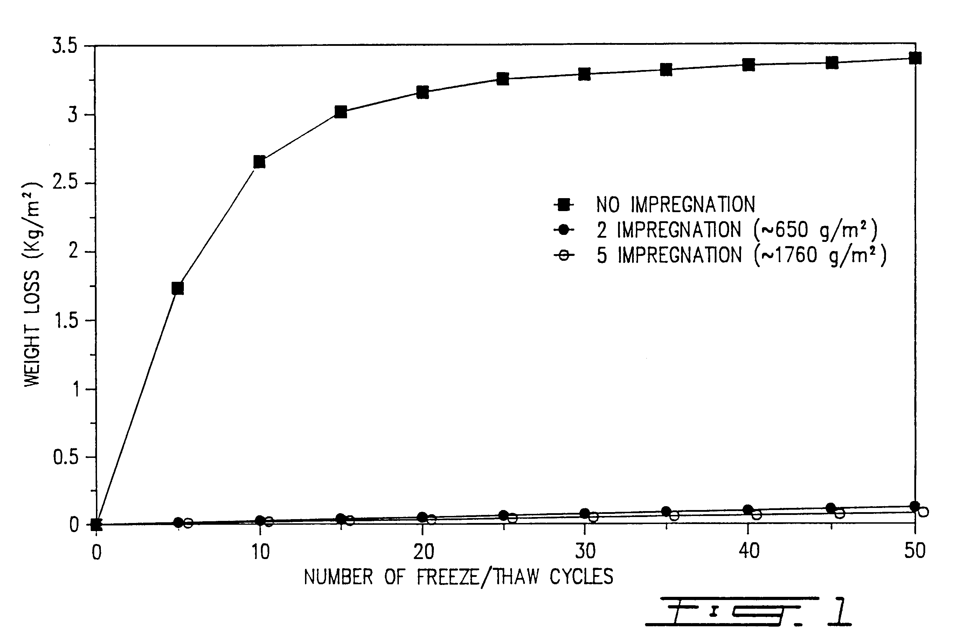

Figure 1 is a plot of weight loss due to scaling in a concrete, against a number of freeze/thaw cycles for untreated concrete and concrete treated in accordance with the invention.

### EXAMPLES

The following examples serve to illustrate the invention.

### Examples 1-6

### The Cubes

Concrete cubes or blocks were made by mixing one part of Portland cement (type 10 or ASTM type 1, a general use cement), 0.52 parts of water, 2.25 parts of sand and 2.75 parts of aggregates having a particle size 4 and 20 mesh (4.76 and 0.84 mm), said parts being parts by weight.

The size distribution of the aggregates were as shown in Table 1.

**Table 1**

| Aggregate size distribution | (mm) | Partition (%) |
|---|---|---|
| 4-6 | 4.76-3.36 | 30 |
| 6-8 | 3.36-2.38 | 25 |
| 8-12 | 2.38-1.68 | 20 |
| 12-16 | 1.68-1.19 | 15 |
| 16-20 | 1.19-0.84 | 10 |

The concrete was cast into cubes, and covered with plastic for 3 days, then cured for 28 days in distilled water.

The concrete cubes were allowed to dry for a period of 24 hours: at room temperature for Examples 1 to 4, Table II; for Examples 5 and 6, Table III, the cubes were dried at elevated temperature by placing them in an oven at 50°C.

The cubes were then treated as follows:

### Treatment with a Scaling Inhibitor

The concrete cubes were immersed in sodium monofluorophosphate aqueous solution for a period of 4 hours, in order to allow for penetration of the solution into the concrete cubes. This treatment is defined herein throughout the disclosure and claims as a "MFP treatment cycle". The cubes were weighed before and after treatment. Before any other cycle, the cubes were left at room temperature for 24 hours.

### Freeze/Thaw Determination

In order to determine the freeze/thaw characteristics of each cube, the following procedure was followed for concrete cubes subjected to the MFP treatment cycle and cubes which were not treated (for comparison purposes):
The cubes, treated or not with sodium monofluorophosphate, were washed with water and allowed to dry on a board for 3 days or until their weight was constant. The cubes were then placed in a recipient containing a cellulose sponge. A 4% aqueous NaCl solution was added to half the height of the sponge. The recipient was then tightly closed and placed in a freezer during 16 to 18 hours at -10°C.

The recipient was then kept at room temperature during 6 to 8 hours so that a "freeze/thaw cycle" was a day. Tests of 5 to 7 freeze/thaw cycles were conducted: the number of cycles was determined by a visual examination of the cubes i.e.until in appearance a certain amount had disappeared. The cubes were then washed with distilled water and dried for 24 hours to measure the weight loss and average the cube weight loss.

The recipient was kept tightly closed during the freeze/thaw cycles.

Table II illustrates the effect of sodium monofluorophosphate treatment on concrete blocks after treatment and drying at room temperature (R.T.) during a day.

**Table II**

| **Scaling of concretes, dried at R.T. and then treated with MFP** | | | | | |
|---|---|---|---|---|---|
| Example No.: | Sample A | 1 | 2 | 3 | 4 |
| MPF treatment (cycle(s) x concentration) | None | 1x5% | 1x20% | 3x20% | 5x20% |
| % of MPF retained, as determined by weight gain | 0 | 0 | 0.4 | 1.5 | 3.7 |
| FREEZE/THAW TEST IN 4% NaCl SOLUTION Weight loss (%) | 32 | 12 | 10 | 7 | 0 |

As is easily seen from Table II, the non-treated cubes (sample A) had a weight loss of 32% weight during about a week of treatment while in Example 1, which had been treated once, a 12% loss had occurred.

In Example 2, where cubes had been treated with one cycle at 20% MFP, only 10% a weight loss of average had occurred.

In Example 3, where cubes had been treated with 3 cycles of 20% MFP each cycle, a 7% average loss in weight of the cubes had occurred.

In Example 4, where cubes had been treated with 5 cycles, at 20% MFP each cycle, the cubes of concrete lost no weight.

### Examples 5 and 6

The MFP was found to have a greater synergistic effect on concrete, when the concrete was dried, as is evident from Table III, where the drying was conducted at 50°C, with all other conditions remaining the same as in Examples 2 and 4, except that for the freeze/thaw determination, one group of the cubes were treated in water and another group in 4% NaCl solution.

Table III illustrates that the freeze/thaw test showed absolutely no deterioration in water, demonstrating that MFP has no negative effect on the resistance of concrete to freeze/thaw scaling.

Furthermore, even concrete cubes treated with only one cycle of MFP at a concentration of 20%, suffered no weight loss. Also the MPF concentration retained in the concrete, as determined by weight gain, was higher. As is shown in Table III, dried concrete absorbs a larger amount of MFP solution. The concrete, dried at this higher temperature absorbs about 30% more MFP, as is shown in Table III.

**Table III**

| **Scaling of concrete, dried at 50°C. and Treated with MFP** | | |
|---|---|---|
| Example No. | 5 | 6 |
| MFP TREATMENT (cycle(s) x concentration) | 1x20% | 5x20% |
| % of MFP retained as determined by weight gain | 0.5 | 5.9 |
| Freeze/thaw test in water (weight loss %) | 0 | 0 |
| Freeze/thaw test in 4% NaCl solution (weight loss in %) | 0 | 0 |

Tables II and III demonstrate that higher MFP concentrations in the concrete produce a greater resistance to freeze/thaw scaling, if one compares the weight gain indicative of the % MFP retained versus the weight loss.

Also, if one compares Table II against Table III, the weight gain which is the MFP retained, for a given concentration and cycle is higher when a concrete is dried at a higher temperature, demonstrating that the concrete acts as a sponge, drawing a greater amount of MFP solution, when it is dry.

This also indicates that the contacting of the sodium fluorophosphate should preferably be conducted immediately following setting of the concrete in order to prevent any scaling.

### Examples 7-14

Concrete slabs were made in accordance with ASTM C-672 standard. The slabs were designed to have a low resistance to freezing and thawing and were subjected to impregnation with MFP in aqueous solution. The slabs were maintained at 40°C. for 24 hours before the first impregnation and at 23°C. and 50% relative humidity for 48 hours between subsequent impregnations.

A first batch A of the slabs was subjected to two impregnations each of 5 minutes duration, and a second batch B of cubes was subjected to five impregnations each of 30 minutes.

The MFP aqueous solution had a concentration of 20%, by weight, MFP. The slabs were stored at 23°C. and 50% relative humidity.

The results are recorded in Table IV:

**Table IV**

| **Level of Impregnation of MFP as a Function of the Number of Impregnations** | | |
|---|---|---|
| | Amount of Impregnation of MFP g of MFP solution/m² concrete | |
| Impregnation Cycle | Batch A | Batch B |
| 1 | 365 | 600 |
| 2 | 700 | 1000 |
| 3 | | 1200 |
| 4 | | 1550 |
| 5 | | 1770 |

The impregnated slabs of batches A and B as well as similar slabs which were not treated were subjected to compressive strength and stress trials, 9 days and 3 months after the impregnation of batches A and B, after storage at 23°C. and 50% relative humidity.

The compressive strength results after 9 days are recorded in Table V:

**Table V**

| Example No. | Comparison No Impregnation (MPa) | With Impregnation | |
|---|---|---|---|
| | | 2 Impregnations (MPa) | 5 Impregnations (MPa) |
| 11 | 38.9 | 42.1 | 48.5 |
| 12 | 41.5 | 44.7 | 48.1 |
| 13 | 41.5 | 40.3 | 44.8 |
| 14 | 40.7 | 44.3 | 47.2 |
| 15 | 42.6 | 44.9 | 47.7 |
| 16 | 41.3 | 43.7 | 38.9 |
| 17 | 40.3 | 38.4 | 46.3 |
| 18 | 43.5 | 39.1 | 45.5 |

The compressive strength results after 3 months are recorded in Table VI:

**Table VI**

| Example No. | Comparison No Impregnation (MPa) | With Impregnation | |
|---|---|---|---|
| | | 2 Impregnations (MPa) | 5 Impregnations (MPa) |
| 7 | 42.6 | 39.7 | 44.1 |
| 8 | 39.0 | 38.7 | 44.3 |
| 9 | 41.2 | 40.6 | 44.7 |
| 10 | 40.8 | 41.2 | 46.3 |
| 11 | | 43.7 | 48.3 |
| 12 | | 38.7 | 41.7 |
| 13 | | 43.6 | 45.1 |
| 14 | | 42.9 | 44.3 |

The stress results after 9 days are recorded in Table VII:

**Table VII**

| Example No. | Comparison (MPa) | With Impregnation | |
|---|---|---|---|
| | | (MPa) 2 | (MPa) 5 |
| 7 | 4.76 | 5.12 | 4.86 |
| 8 | 4.84 | 4.51 | 4.87 |
| 9 | 5.47 | 4.89 | 5.00 |

The stress results after 3 months are recorded in Table VIII:

**Table VIII**

| Example No. | Comparison (MPa) | ... With Impregnation | |
|---|---|---|---|
| | | (MPa) 2 | (MPa) 5 |
| 7 | 6.64 | 6.15 | 5.94 |
| 8 | 6.24 | 7.19 | 6.46 |
| 9 | 6.03 | 6.60 | 6.42 |

Figure 3 shows graphically the weight loss of the concrete slabs. by scaling, with number of freeze/thaw cycles for concrete slabs of batches A and B, and similar slabs of a batch C not subjected to impregnation with MFP. These tests were conducted after 3 months storage at 23°C. and 50% relative humidity.

The lowest weight loss is for batch B which were subjected to the 5 impregnations and the highest weight loss is for batch C not subjected to impregnation with MFP.

### Example 15

Concrete slabs were made as described in Examples 7 to 14. A batch D of the slabs was soaked in an MFP solution and a batch E was soaked in water. In each case the slabs were subjected to five soakings each for 10 days at 40°C., the slabs being dried in a drying oven at 40°C. between each soaking.

The resulting batches were subjected to freeze/thaw cycles and the weight loss resulting from soaking was recorded. The results are set out in Table IX.

**Table IX**

| No. of Freeze/Thaw Cycles | Weight Loss (kg/m²) | |
|---|---|---|
| | Batch D | Batch E |
| 5 | 0 | 0.05 |
| 10 | 0.03 | 0.2 |
| 15 | 0.03 | 0.76 |
| 20 | 0.09 | ..1.7 |
| 25 | 0.10 | 2.3 |
| 30 | 0.14 | 2.8 |
| 35 | 0.17 | 3.3 |
| 40 | 0.17 | 3.6 |

Although the present invention has been explained hereinabove by way of preferred embodiments thereof, it should be pointed out that any modifications to these preferred embodiments, within the scope of the appended claims, is not deemed to change or alter the nature and scope of the invention.

## Claims

1. A method for reducing scaling on a concrete surface due to freezing and thawing, comprising: contacting a surface of a non-reinforced concrete with a system containing at least sodium fluorophosphate, and allowing said sodium fluorophosphate to penetrate said concrete surface into a surface region of the concrete, to provide in the surface region an amount of said sodium fluorophosphate effective to reduce scaling on said surface, due to freezing and thawing.

2. A method according to claim 1, wherein said system comprises a solution of sodium fluorophosphate dissolved in an aqueous medium.

3. A method according to claim 1, wherein said system comprises said sodium fluorophosphate and a deicer.

4. A method according to claim 1, wherein said system comprises said sodium fluorophosphate and sodium chloride.

5. A method according to claim 1, 2, 3 or 4, wherein said fluorophosphate is sodium monofluorophosphate.

6. A method according to claim 2, which includes a step of drying said concrete to increase the capacity of said concrete to receive said sodium fluorophosphate, prior to contacting the concrete surface with sodium fluorophosphate.

7. A method for reducing scaling on a concrete surface due to freezing and thawing comprising: drying a surface of a concrete to increase the capacity of the concrete to receive sodium fluorophosphate, contacting said surface of said concrete with a system comprising a solution of sodium fluorophosphate dissolved in an aqueous medium, and allowing said sodium fluorophosphate to penetrate said concrete surface into a surface region of the concrete, to provide in the surface region an amount of said sodium fluorophosphate effective to reduce scaling on said surface, due to freezing and thawing.

8. A method according to claim 7, wherein said concrete is non-reinforced concrete.

9. A method according to claim 7, wherein said concrete is a reinforced concrete having steel rebars therein.

10. A method according to claim 7, 8 or 9, wherein said system comprises said sodium fluorophosphate and a deicer.

11. A method according to claim 7, 9 or 9, wherein said system comprises said sodium fluorophosphate and sodium chloride.

12. A method according to claim 7, 8 or 9, wherein said fluorophosphate is sodium monofluorophosphate.

13. A method according to claim 1, wherein said contacting is carried out immediately following setting of said concrete.

14. A method according to claim 2 or 7, wherein said solution contains up to 35%, by weight, sodium monofluorophosphate.

15. A method according to claim 2 or 7, wherein said solution contains from 0.5 to 20%, by weight, sodium monofluorophosphate.

16. A non-reinforced concrete having a concrete surface with at least a residual amount of sodium fluorophosphate.

17. A non-reinforced concrete having a concrete surface with at least a residual amount of sodium fluorophosphate, as obtained by the method of claim 1, 2, 3, 4, 6 or 8.

18. Use of sodium monofluorophosphate for reducing scaling of a concrete when the concrete is subject to freezing and thawing.

19. The use of claim 18, wherein said sodium monofluorophosphate is in aqueous solution.

20. Use of a system comprising sodium monofluorophosphate and a deicer for reducing scaling of a concrete when the concrete is subject to freezing and thawing.

21. The use of claim 20, wherein said deicer is sodium chloride.

## Patentansprüche

1. Verfahren zur Verringerung der Abschalung auf einer Betonoberfläche infolge von Frieren und Auftauen, gekennzeichnet durch Kontaktieren einer Oberfläche eines nichtverstärkten Betons mit einem System, das wenigstens Natriumfluorophosphat enthält, und Ermöglichung des Eindringens des Natriumfluorophosphates in die Betonoberfläche in einen Oberflächenbereich des Betons, um in dem Oberflächenbereich eine Menge an Natriumfluorophosphat vorzusehen, um das Abschalen auf der Oberfläche infolge von Frieren und Auftauen zu verringern.

2. Verfahren nach Anspruch 1, worin das System eine Lösung von Natriumfluorophosphat, gelöst in einem wäßrigen Medium umfaßt.

3. Verfahren nach Anspruch 1, worin das System Natriumfluorophosphat und ein Enteisungsmittel umfaßt.

4. Verfahren nach Anspruch 1, worin das System Natriumfluorophosphat und Natriumchlorid umfaßt.

5. Verfahren nach Anspruch 1, 2, 3 oder 4, worin das Fluorophosphat Natriummonofluorophosphat ist.

6. Verfahren nach Anspruch 2, das eine Stufe der Trocknung des Betons einschließt, um die Kapazität des Betons zur Aufnahme von Natriumfluorophosphat vor dem Kontaktieren der Betonoberfläche mit Natriumfluorophosphat zu erhöhen.

7. Verfahren zur Verringerung der Abschalung auf einer Betonoberfläche infolge von Frieren und Auftauen, gekennzeichnet durch Trocknen einer Oberfläche eines Betons zur Erhöhung der Kapazität des Betons zur Aufnahme von Natriumfluorophosphat, Kontaktieren der Oberfläche des Betons mit einem System, das eine Lösung von Natriumfluorophosphat gelöst in einem wäßrigen Medium umfaßt, und Gestattung des Eindringens von Natriumfluorophosphat in die Betonoberfläche in einen Oberflächenbereich des Betons, um in dem Oberflächenbereich eine Menge an Natriumfluorophosphat vorzusehen, die wirksam ist, die Abschalung infolge von Frieren und Auftauen der Betonoberfläche zu verringern.

8. Verfahren nach Anspruch 7, worin der Beton ein nichtverstärkter Beton ist.

9. Verfahren nach Anspruch 7, worin der Beton ein verstärkter Beton mit Bewehrungsstahl darin ist.

10. Verfahren nach Anspruch 7, 8 oder 9, worin das System Natriumfluorophosphat und ein Enteisungsmittel umfaßt.

11. Verfahren nach Anspruch 7, 8 oder 9, worin das System Natriumfluorophosphat und Natriumchlorid umfaßt.

12. Verfahren nach Anspruch 7, 8 oder 9, worin das Fluorophosphat Natriummonofluorophosphat ist.

13. Verfahren nach Anspruch 1, worin das Kontaktieren unmittelbar im Anschluß an das Abbinden des Betons durchgeführt wird.

14. Verfahren nach Anspruch 2 oder 7, worin die Lösung bis zu 35 Gewichts-% Natriummonofluorophosphat enthält.

15. Verfahren nach Anspruch 2 oder 7, worin die Lösung 0,5 bis 20 Gewichts-% Natriummonofluorophosphat enthält.

16. Nichtverstärkter Beton mit einer Betonoberfläche, die wenigstens eine Restmenge an Natriumfluorophosphat enthält.

17. Nichtverstärkter Beton, der eine Betonoberfläche mit wenigstens einer Restmenge an Natriumfluorophosphat enthält, wie nach dem Verfahren von Anspruch 1, 2, 3, 4, 6 oder 8 erhalten.

18. Verwendung von Natriummonofluorophosphat zur Verringerung der Abschalung eines Betons, wenn der Beton Gegenstand von Frieren und Auftauen ist.

19. Verfahren nach Anspruch 18, worin das Natriummonofluorophosphat in wäßriger Lösung vorliegt.

20. Verwendung eines Systems, das Natriummonofluorophosphat und ein Enteisungsmittel enthält zur Verringerung der Abschalung eines Betons, wenn der Beton Gegenstand des Frierens und Auftauens ist.

21. Verwendung nach Anspruch 20, worin das Enteisungsmittel Natriumchlorid ist.

## Revendications

1. Procédé de réduction d'écaillage sur une surface de béton dû au gel et au dégel, consistant : à mettre en contact une surface d'un béton non armé avec un système contenant au moins du fluorophosphate de sodium et à laisser ledit fluorophosphate de sodium pénétrer ladite surface de béton dans une région de surface du béton pour fournir dans la région de surface une quantité dudit fluorophosphate de sodium efficace pour réduire l'écaillage sur ladite surface dû au gel et au dégel.

2. Procédé selon la revendication 1, dans lequel ledit système comprend une solution de fluorophosphate de sodium dissous dans un milieu aqueux.

3. Procédé selon la revendication 1, dans lequel ledit système comprend ledit fluorophosphate de sodium et un dégivreur.

4. Procédé selon la revendication 1, dans lequel ledit système comprend ledit fluorophosphate de sodium et du chlorure de sodium.

5. Procédé selon la revendication 1, 2, 3 ou 4, dans lequel ledit fluorophosphate est le monofluorophosphate de sodium.

6. Procédé selon la revendication 2, qui comprend une étape de séchage dudit béton pour augmenter la capacité dudit béton à recevoir ledit fluorophosphate de sodium avant la mise en contact de la surface de béton avec le fluorophosphate de sodium.

7. Procédé pour réduire l'écaillage sur une surface de béton dû au gel et au dégel consistant : à sécher une surface d'un béton pour augmenter la capacité du béton à recevoir le fluorophosphate de sodium, à mettre en contact ladite surface dudit béton avec un système comprenant une solution de fluorophosphate de sodium dissous dans un milieu aqueux et à laisser ledit fluorophosphate de sodium pénétrer ladite surface de béton dans une région de surface du béton pour fournir dans la région de surface une quantité dudit fluorophosphate de sodium efficace pour réduire l'écaillage sur ladite surface dû au gel et au dégel.

8. Procédé selon la revendication 7, dans lequel ledit béton est du béton non armé.

9. Procédé selon la revendication 7, dans lequel ledit béton est un béton armé présentant des armatures en acier à l'intérieur de celui-ci.

10. Procédé selon la revendication 7, 8 ou 9, dans lequel ledit système comprend ledit fluorophosphate de sodium et un dégivreur.

11. Procédé selon la revendication 7, 8 ou 9, dans lequel ledit système comprend ledit fluorophosphate de sodium et du chlorure de sodium.

12. Procédé selon la revendication 7, 8 ou 9, dans lequel ledit fluorophosphate est le monofluorophosphate de sodium.

13. Procédé selon la revendication 1, dans lequel on réalise ladite mise en contact immédiatement après la pose dudit béton.

14. Procédé selon la revendication 2 ou 7, dans lequel ladite solution contient jusqu'à 35% en poids de monofluorophosphate de sodium.

15. Procédé selon la revendication 2 ou 7, dans lequel ladite solution contient de 0,5 à 20% en poids de monofluorophosphate de sodium.

16. Béton non armé présentant une surface de béton avec au moins une quantité résiduelle de fluorophosphate de sodium.

17. Béton non armé présentant une surface de béton avec au moins une quantité résiduelle de fluorophosphate de sodium, comme obtenu par le procédé de la revendication 1, 2, 3, 4, 6 ou 8.

18. Utilisation de monofluorophosphate de sodium pour réduire l'écaillage d'un béton lorsque le béton est soumis au gel et au dégel.

19. Utilisation de la revendication 18, dans laquelle ledit monofluorophosphate de sodium est en solution aqueuse.

20. Utilisation d'un système comprenant du monofluorophosphate de sodium et un dégivreur pour réduire l'écaillage d'un béton lorsque le béton est soumis au gel et au dégel.

21. Utilisation de la revendication 20, dans laquelle ledit dégivreur est le chlorure de sodium.
